# EUROPEAN PATENT APPLICATION

(11) **EP 2 716 472 A1**
(43) Date of publication of application: **09.04.2014**
(21) Application number: 13187312.7
(22) Date of filing: 04.10.2013
(51) Int. Cl.: B60B 1/14, B60B 21/06, B60B 25/00, B60B 25/02, B60B 23/06, A61G 5/00, B60B 19/00, B62K 15/00

(54) **Spoked wheel and methods of using the same**

(30) Priority: 05.10.2012 US 201213646116
(71) Applicant: ROYAL COLLEGE OF ART, London SW7 2EU (GB); Fitzsimons, Duncan, London W10 5LZ (GB)
(72) Inventor: Thom, Paul, Wayne, NJ New Jersey 07470 (US); Rubin, Richard, Wayne, NJ New Jersey 07470 (US); Puig, Miguel, Wayne, NJ New Jersey 07470 (US); Magnifico, Matthew, Wayne, NJ New Jersey 07470 (US); Gomes, Francis, Wayne, NJ New Jersey 07470 (US); Schnepel, Anthony, Wayne, NJ New Jersey 07470 (US); Barra, John, Wayne, NJ New Jersey 07470 (US); Fitzsimons, Duncan, London, W10 5LZ (GB)
(74) Representative: Coles, Andrea Birgit

(57) **Abstract**

The present invention provides a spoked wheel. The spoked wheel includes a rim and a hub configured to rotate with the rim. In one embodiment of the present invention, the spoked wheel includes a locking mechanism placed within the hub. In another embodiment, the spoked wheel includes a locking spoke extending between the hub and the rim. In a further embodiment, the spoked wheel includes combination of the locking mechanism and the locking spoke.

## Description

### FIELD OF THE INVENTION

The present invention relates to spoked wheels, and more particularly, to a spoked wheel having a secure and compact configuration.

### BACKGROUND OF THE INVENTION

Folding vehicles that require wheels such as folding bicycles and wheelchairs are well known and include a frame that will fold. However, the wheels used are a fixed size and the size of the wheels limits the size that the bicycle or wheelchair can be folded into (the "package size").

A variety of folding vehicles are available commercially having a variety of different wheel sizes. However, there is a need in the art to provide a vehicle with wheels, especially larger wheels, which can be folded into a smaller-size package. Likewise, it is also needed in the art to provide a vehicle with foldable wheels for easier handling for travel, transport and storage. Further, there is also need in the art to provide a vehicle with foldable wheels which are stable and secure once mounted on the vehicle.

As such, there is a further need in the art to provide a flexible, secure and compact folding wheel to be placed on any of the foldable vehicles.

### SUMMARY OF THE INVENTION

The present invention provides a spoked wheel and methods of using the same.

The present invention provides a spoked wheel. The spoked wheel includes a rim and a hub configured to rotate with the rim.

In one embodiment of the present invention, the spoked wheel includes a locking mechanism placed within the hub.

In some embodiments the locking mechanism functions to prevent the wheel from collapsing while in use.

In another embodiment, the spoked wheel includes a locking spoke extending between the hub and the rim.

In some embodiments, the locking spoke is configured to rotate in and out of locking positions of the spoked wheel.

In a further embodiment, the spoked wheel includes combination of the locking mechanism and the locking spoke.

In some embodiments, the spoked wheel is configured to be in a locked open configuration.

In some embodiments, the spoked wheel is configured to be in an unlocked folded configuration.

In some embodiments, the spoked wheel is configured to be in a locked folded configuration.

In some embodiments, the spoked wheel is collapsible around the center of the hub.

### BRIEF DESCRIPTION OF THE DRAWINGS

The present invention will be more readily understood from the detailed description of exemplary embodiments presented below considered in conjunction with the attached drawings, of which:

Figure 1 is a schematic view of a wheel in accordance with one embodiment of the present application.

Figure 1A is a schematic view of the wheel of Figure 1 in accordance with another embodiment of the present application.

Figure 1B is a schematic view of the wheel of Figure 1 in accordance with another embodiment of the present application.

Figure 2 is a schematic view of a locking spoke of the wheel of Figure 1 in accordance with an embodiment of the present application;

Figures 3A-3E illustrate locking of the locking spoke of Figure 1 with respect to the wheel in accordance with an embodiment of the present application.

Figure 4 is a schematic view of the wheel in accordance with another embodiment of the present invention.

Figures 4A and 4B illustrate a cross-section view of the wheel of Figure 4 in accordance with an embodiment of the present application.

Figures 4C and 4D illustrate a cross-section view of the wheel of Figure 4 in accordance with another embodiment of the present application.

Figure 5 is a schematic view of the wheel in accordance with further embodiment of the present invention.

Figures 5A and 5B illustrate a cross-section view of the wheel of Figure 5 in accordance with another embodiment of the present application.

Figures 5C and 5D illustrate a cross-section view of the wheel of Figure 5 in accordance with further embodiment of the present application.

Figure 5E illustrates a top view of a portion of the wheel of Figure 5 in the open locked configuration in accordance with the embodiment of the present application.

Figure 5F illustrates a top view of a portion of the wheel of Figure 5 in an open unlocked configuration in accordance with the embodiment of the present application.

Figure 6 illustrates a top view of the wheel of Figure 5 in a locked open configuration in accordance with the embodiment of the present application.

Figure 7 illustrates the wheel of Figure 5 in an un-locked folded configuration in accordance with the embodiment of the present application.

Figure 8 illustrates a top view of a portion of the wheel of Figure 5 in a locked folded configuration in accordance with the embodiment of the present application.

Figure 9 illustrates the wheel of Figure 5 in an un-locked open configuration in accordance with the embodiment of the present application.

### DETAILED DESCRIPTION OF THE INVENTION

The spoked wheel of the present invention will initially be described in connection with a wheelchair wheel but similar considerations apply to wheels for other vehicles such as bicycles or to any application where a wheel is needed but it would be beneficial to be able to reduce the amount of space it occupies when not in use.

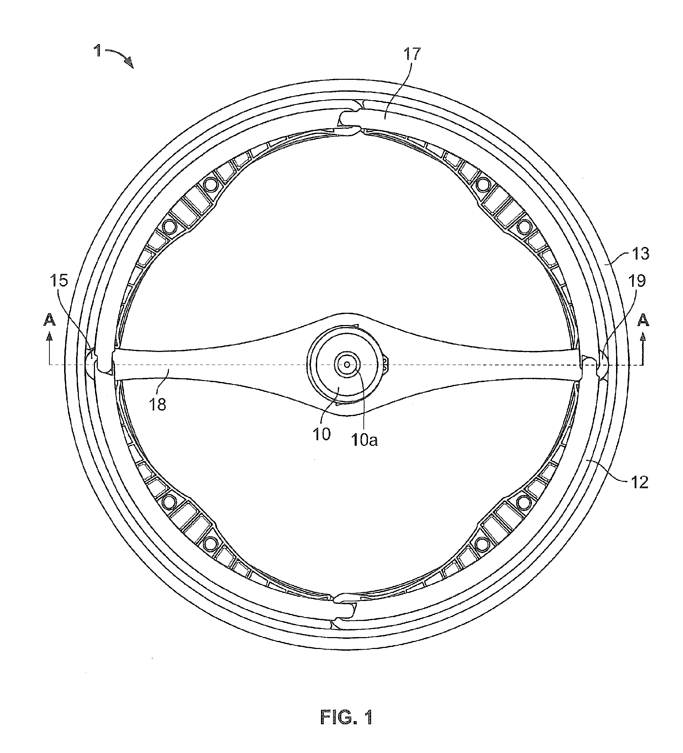

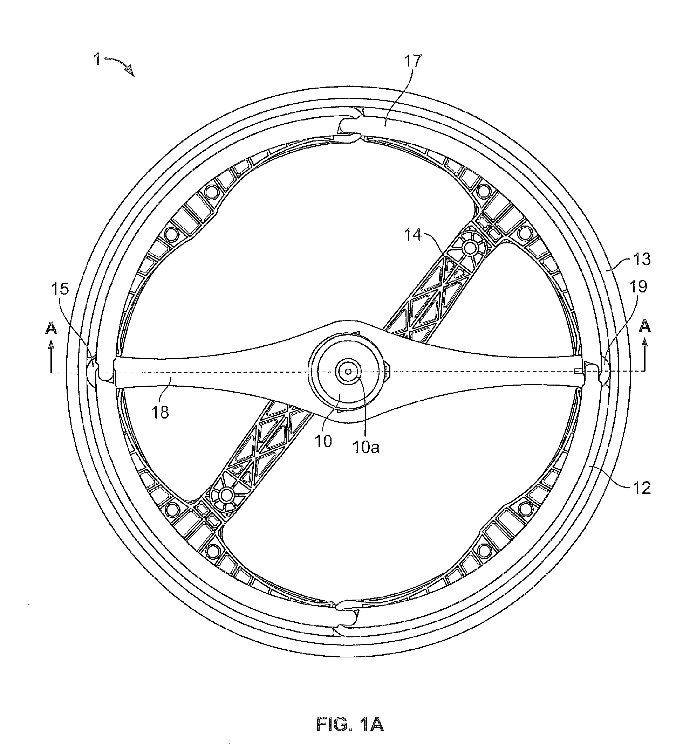

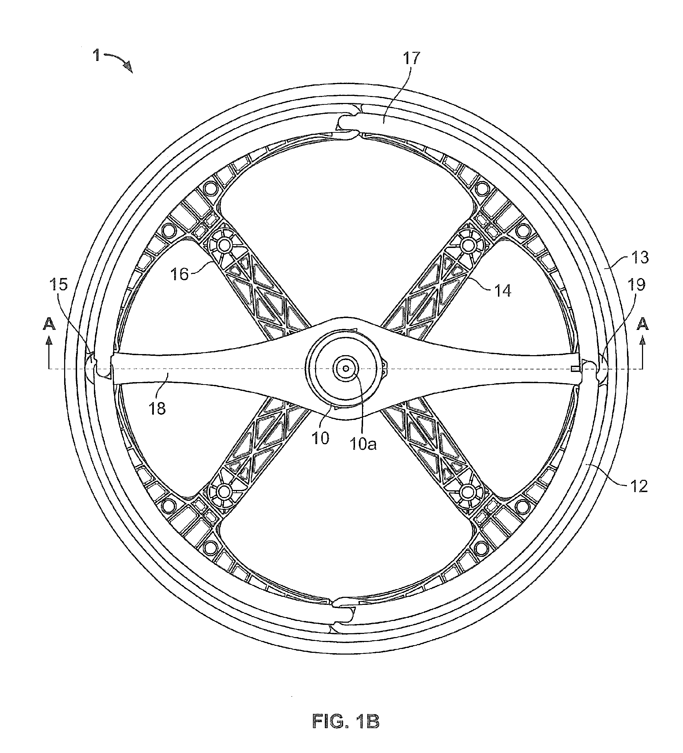

Referring initially to Figure 1, there is shown a spoked wheel 1 in accordance with one embodiment of the present invention. The wheel 1 having a hub 10 including an opening 10a and a rim segment (a.k.a rim) 12. In one embodiment, the hub 10 rotates with the rim 12. In the present specification, the hub is used to mean the central part of the wheel and is not intended to be limited to an axis about which the wheel rotates, although as known to one skilled in the art, such an axis will pass through the hub when in use. A tire 13 is placed on the rim 12 which will remain in place on the rim during the folding and unfolding procedure. The tire 13 may be a tubular or a solid tire. In one embodiment, the rim 12 is made of at least two segments of identical shape. In another embodiment, the rim 12 is made up of four segments of identical shape. Each of the rim segments 12 has an identical radius and may be securely attached to one another by a joint (not shown) which is fabricated identically and conforms to a circular shape.

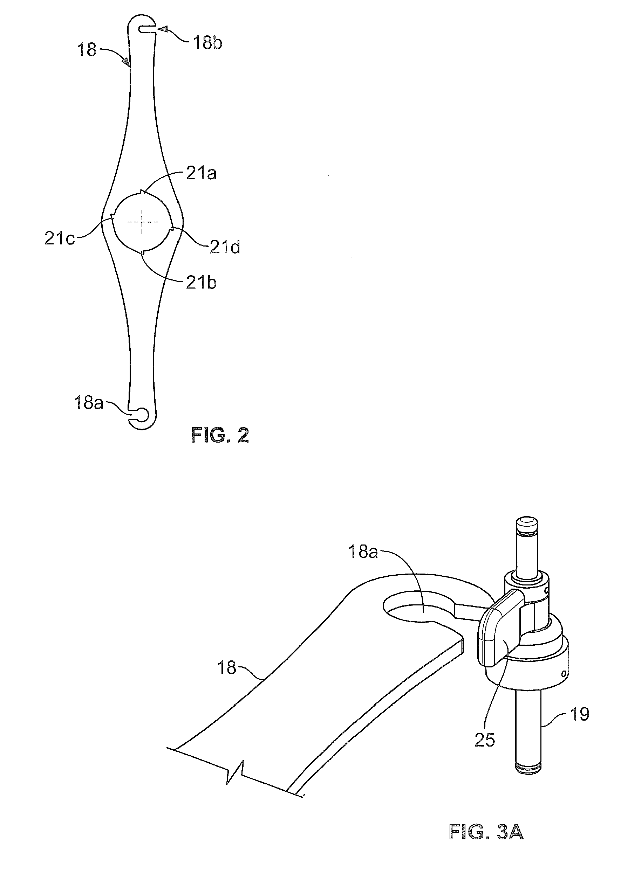

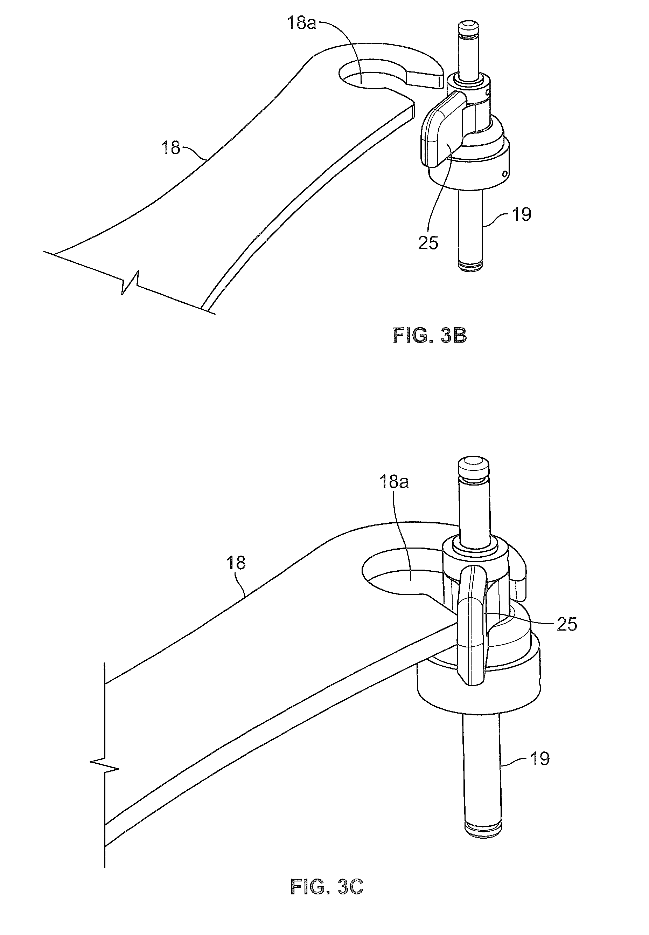

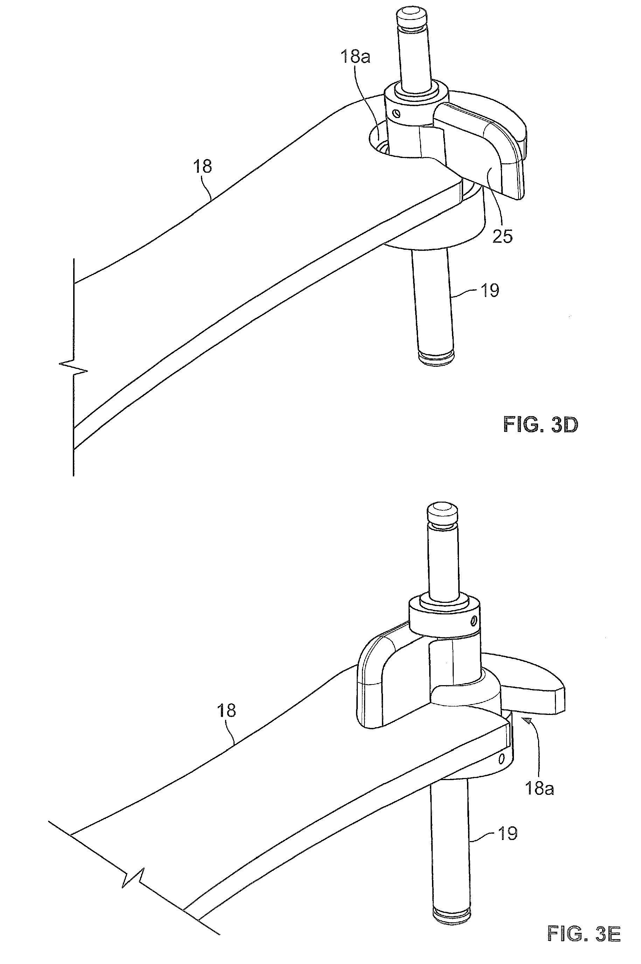

The wheel also includes a hand rim 17 mounted to the rim 12 via pins (not shown. to align with the rim 12 as shown in Figure 1. In one embodiment, the hand rim 17 is preferably made from materials such as polypropylene, other mineral-filled PP, other high-strength engineered plastics, cast aluminum or tubular aluminum. The wheel further includes at least one latch pin 19 and a rim pin 15, both of which are securely connected between the hand rim 17 and the rim 12. As shown in Figure 1, the latch pin 19 and the rim pin 15 are preferably located approximately 180 degrees from each other. The latch pin 19 and the rim pin 15 are preferably made from materials such as stainless steel, brass alloys etc. A latch lever 25 (show in Figure 3) is mounted on the latch pin 19. In one embodiment, the latch lever 25 is loaded with an elastic material such as a spring. The latch lever 25 is preferably made from materials such as polypropylene, other structural plastics, cast or machined aluminum or brass alloys.

The wheel further includes a locking spoke 18 extending between the hub 10 and the rim 12as illustrated in Figure 1. As shown in Figure 1, the locking spoke 18 extends diametrically across the hand rim 17 and is configured to be in a lock and unlock position as described in greater detail herein below. In one embodiment, the locking spoke 18 is made from metals such as aluminum, cast zinc, cast aluminum, steel etc. In other embodiment, the locking spoke 18 is made from plastics such as glass or mineral-fill polyamide, glass or mineral-filled polypropylene or other high-strength engineered plastics.

In one embodiment, the wheel 1 includes at least one spoke 14 that extends between the hub 10 and the rim 12 as illustrated in Figure 1A. In one embodiment, the spoke 14 is connected at its respective end to one of the rim segments of the rim 12. The spoke 14 is made preferably from materials such as glass-filled polyamide, high strength engineered plastics, cast or machined zinc or aluminum.

In another embodiment, the wheel 1 includes at least two spokes, the spoke, 14, and the spoke 16 that extend between the hub 10 and the rim 12 as illustrated in Figure 1B. In one embodiment, the spokes 14 and 16 extend substantially along two diameters of the wheel as shown in Figure 1. The spoke 16 is also made preferably from materials such as glass-filled polyamide, high strength engineered plastics, cast or machined zinc or aluminum. In one embodiment, the spoke 16 is also connected at their respective ends to one of the rim segments of the rim 12.

Figure 2 depicts the locking spoke 18 including a plurality of notches 21 placed on a center portion of the locking spoke 18 placed right above the hub 10. The center portion is preferably circular in shape. In one embodiment, the locking spoke 18 includes at least four notches, 21a, 21b, 21c and 21d as shown in Figure 2. Notches 21a and 21b preferably form first set of notches and notches 21c and 21d preferably form second set of notches, as shown in Figure 2. Each end of the locking spoke 18 includes a slot 18a and 18b such that the slot 18a is configured to engage with the latch pin 19 and the slot 18b is configured to engage with the rim pin 15. In one embodiment, the locking spoke 18 is in a lock position upon engagement of the slot 18a with the latch pin 19. In another embodiment, the locking spoke 18 is an unlock position upon separation or disengagement of the slot 18a from the latch pin 19. In some embodiments, the locking spoke 18 is configured to move/rotate around the wheel in the unlock position.

Figures 3A-3E illustrate one embodiment of locking the locking spoke 18. Figure 3A depicts the locking spoke 18 approach the latch pin 19 at a level just below the latch lever 25. The locking spoke 18 is lifted up to the level of the latch lever 25 and moved towards the latch pin 19 for engagement as shown in Figure 3B. In one embodiment, the latch lever 25 is manually lifted up and moved towards the latch pin 19. This forces the latch lever 25 to turn and align itself with the slot 18a on the locking spoke 18 as depicted in Figure 3C, which places the locking spoke 18 in a release position and springs back to the level just below the latch lever 25as shown in Figure 3D. The latch lever 25 is now free to spring back to its original position and thereby locks the engagement between the locking spoke 18 and the latch pin 19 as illustrated in Figure 3E. In one embodiment, the third spoke 18 automatically aligns with the rim pin 15 upon locking of one end with the latch pin 19.

Although not shown, in some embodiments, the locking spoke 18 may be unlocked by manually pushing the latch lever 25 to align with the slot 18a and allowing the locking spoke 18 to be lifted up to the level of the latch lever 25 which allows the locking spoke 18 to be free to be pushed out and disengage with the latch pin 19.

The embodiment illustrated in Figure 1, the locking spoke 18 is positioned in a locked position. As discussed above, the locking spoke 18 is in the locked position upon alignment of the slot 18a with the latch pin 19 and the alignment of the slot 18b with the rim pin 15. However, one skilled in the art would appreciate that the locking spoke 18 may be positioned in the unlock position.

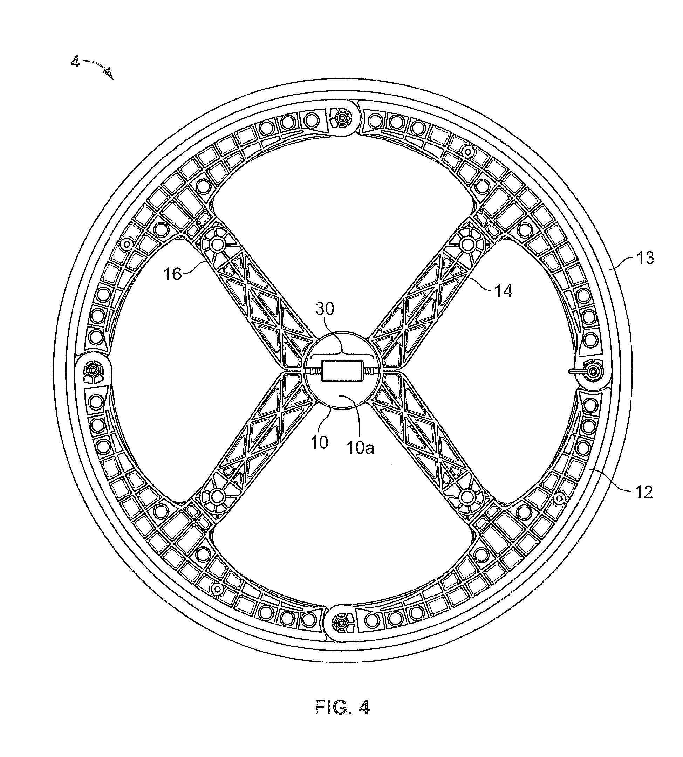

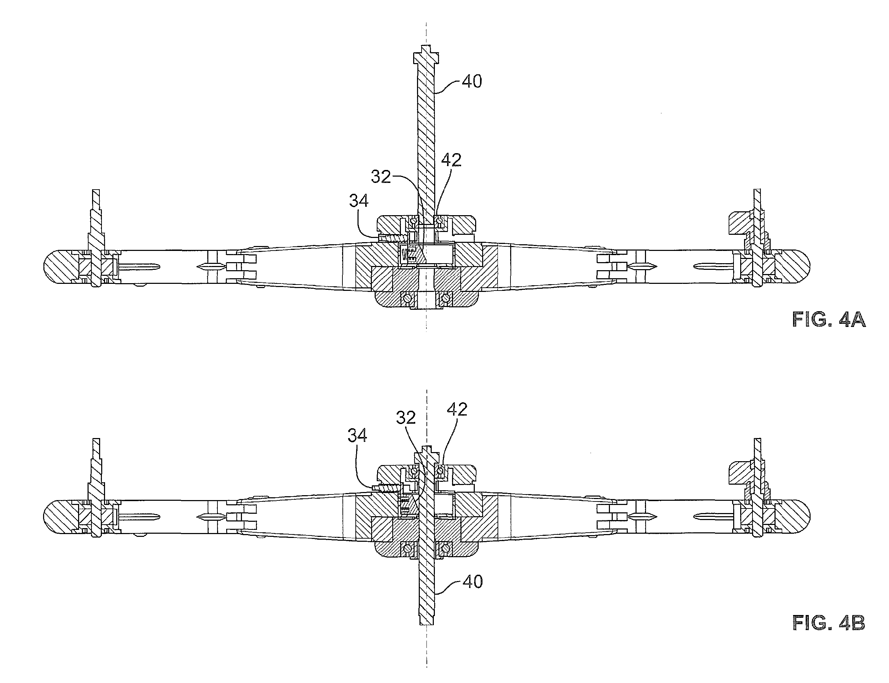

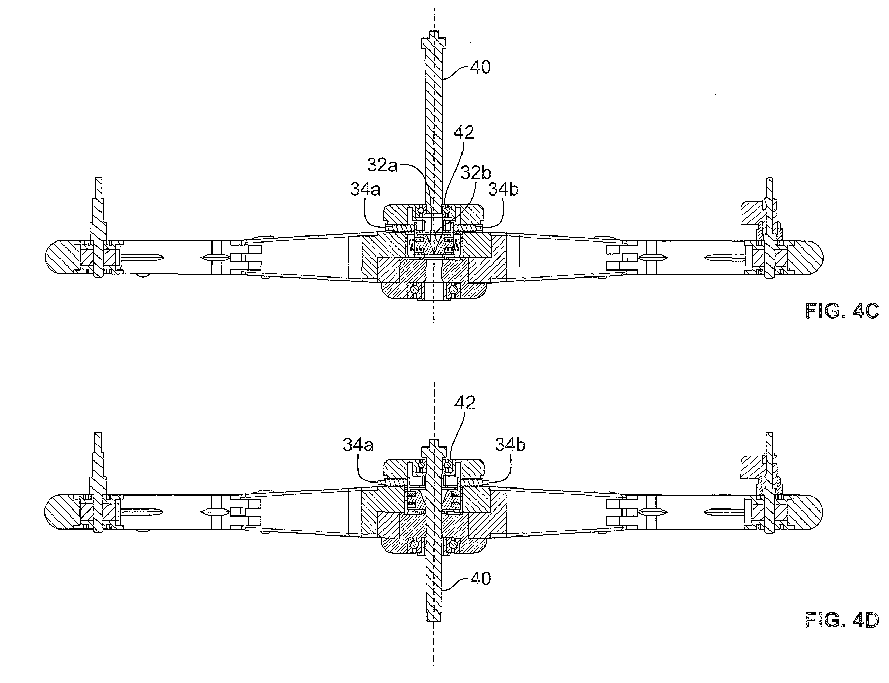

Figure 4 illustrates a spoked wheel 4 in accordance with another embodiment of the present invention. The spoked wheel 4 includes some of the same elements as the spoked wheel 1 as discussed above. Some of these elements are the hub 10 including the opening 10a and the rim segment (a.k.a rim) 12. In one embodiment, the hub 10 rotates with the rim 12. The spoked wheel 4 also includes the at least two spokes the first spoke, 14, and the second spoke 16 similar to the spoked wheel 1 of Figure 1. The spoke wheel 4 of Figure 4 also includes the tire 13 similar to the spoked wheel of Figure 1. The spoked wheel 4 of Figure 4 also includes a locking mechanism 30 positioned within the hub 10.

Figures 4A and 4B illustrate cross-section view of the spoked wheel of Figure 4 in accordance with the embodiment of the present invention. As shown in Figures 4A and 4B, the locking mechanism 30 includes a cam 32 placed inside the hub 10 and a locking pin 34. The cam 32 is preferably made from materials such as stainless steel, hard steel alloys etc. The locking pin 34 is preferably made from materials such as stainless steel, hard steel alloys etc.

Referring back to the spoked wheel 4 also includes an axle 40 partially inserted into the hub 10 through the opening 10a as shown in the embodiment of Figure 4A and fully inserted into the hub 10 and the locking mechanism 30 as illustrated in the embodiment of Figure 4B. The axle 40 is preferably made from materials such as stainless steel, hard steel alloys etc. In one embodiment, the axle 40 is completely removable from the hub 10. In another embodiment, the axle 40 is partially removable from the hub 10.

As shown in Figures 4A and 4B, the hub 10 further includes a bearing 42 placed in a groove (not shown) of the hub 10 to support the axle 40. In one embodiment, the bearing 42 prevents the axle 40 to be completely removed from the hub 10. The bearing 42 is preferably made from stainless steel, high-strength alloys. In one embodiment, the axle 40 functions to drive on the bearing 42 in order to remain in constant alignment when inserted into the locking mechanism 30 of the hub 10. In other embodiment, the axle 40 functions to drive on the bearing 42 in order to remain in the constant alignment when completely removed from the locking mechanism 30 but partially placed in the hub 10. The locking and the unlocking of the wheel will be described in greater detail herein below.

As shown in Figure 4A, the axle is partially inserted into the hub 10. In this position, cam 32 is pushed inwards towards the groove of the hub 10 causing the locking pin 34 to push outwards away from the cam 32. As such, the wheel of Figure 4A is in an unlocked position.

As shown in Figure 4B, the axle 40 is fully inserted into the hub 10 and the locking mechanism 30. In one embodiment, the axle 40 may be fully inserted into the hub 10 only when the locking spoke 18 is in a locked position. In this position, the cam 32 is pushed outwards away from the groove in the hub 10 causing the locking pin 34 to push further outwards even further away from the cam 32, thereby locking the wheel.

Figure 4C and 4D illustrate a cross-section view of the spoked wheel of Figure 4 in accordance with another embodiment of the present invention As shown in Figures 4C and 4D, the locking mechanism 30 includes at least two cams 32a and 32b placed across from each other as shown in Figure 4C. The cams 32a and 32b are preferably made from materials such as stainless steel, hard steel alloys etc. The two cams 32a and 32b are configured to move towards and away from each other. The locking mechanism 30 also includes at least two locking pins 34a and 34b configured to push outwards when the two cams 32a and 32b respectively move towards and away from each other. The two locking pin 34a and 34b are preferably made from materials such as stainless steel, hard steel alloys etc.

As shown in Figure 4C, the axle is partially inserted into the hub 10. In this position, cams 32a and 32b are pushed inwards towards each other inside the groove of the hub 10 causing the locking pin 34a and 34b to push outwards away from the cams 32a and 32b respectively. As such, the wheel of Figure 4C is in an unlocked position.

As shown in Figure 4D, the axle is fully inserted into the hub 10 and the locking mechanism 30. The axle 40 may be fully inserted into the hub 10 only when the locking spoke 18 is in a locked position. In this position, the cams 32a and 32 are pushed outwards away from each other inside the groove of the hub 10 causing the locking pin 34a and 34b to push further outwards away from the cams 32a and 32b respectively, thereby locking the wheel.

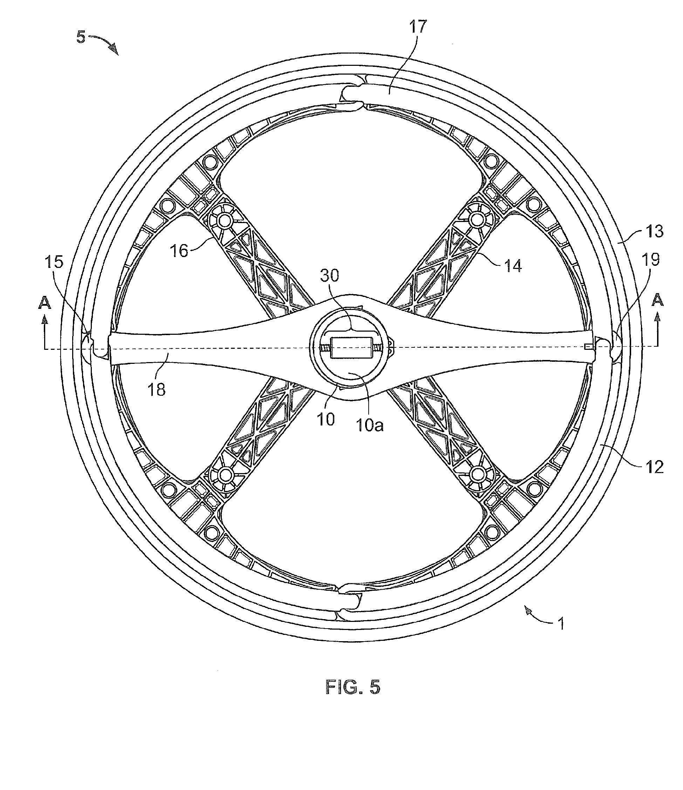

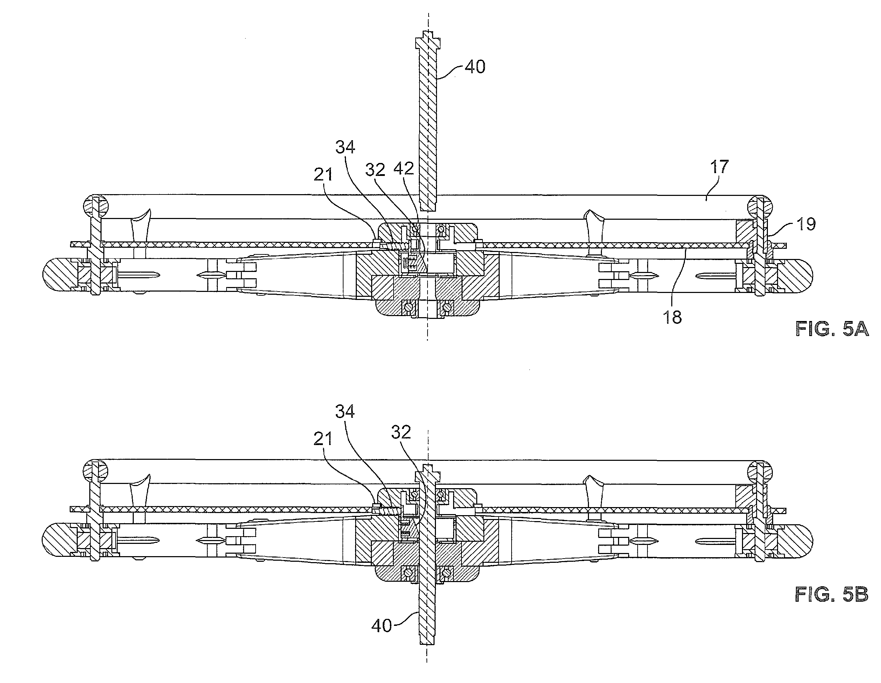

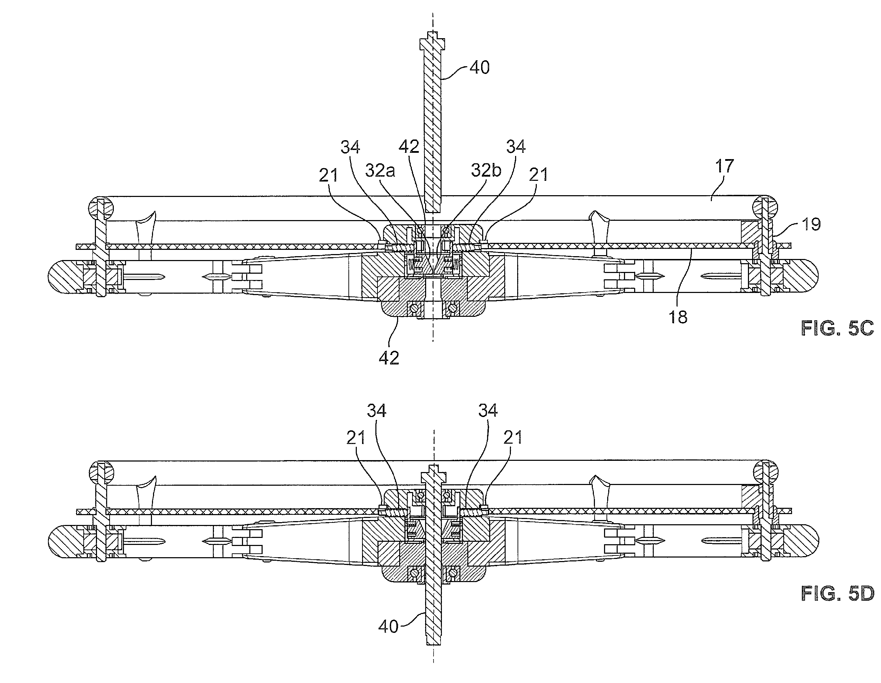

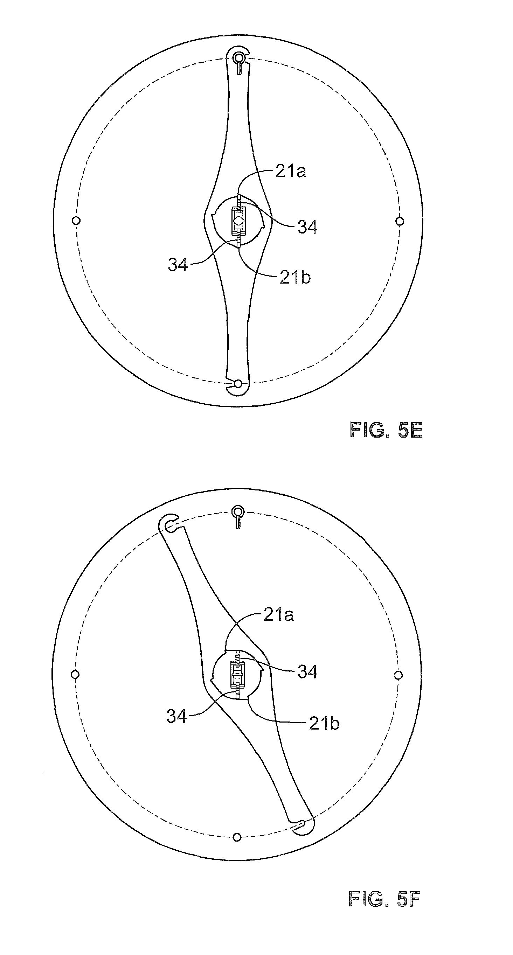

Figure 5 illustrates a spoked wheel 5 in accordance with a further embodiment of the present invention. The spoked wheel 5 includes some of the same elements as the spoked wheel 1 as discussed above. Some of these elements are the hub 10 including the opening 10a and the rim segment (a.k.a. rim) 12, the tire 13, and at least two spokes, the first spoke, 14, and the second spoke 16. The spoked wheel 5 of Figure 5 also includes other elements of the spoked wheel 1 of the Figure 1 such as the hand rim 17 mounted on the rim 12, the least one latch pin 19, the rim pin 15 and the latch lever 25 mounted on the latch pin 19. The spoked wheel 5 further includes the locking spoke 18 positioned above the first and the second spokes 14 and 16 respectively, similar to the spoked wheel 1 in Figure 1. The spoked wheel 5 of Figure 5 also includes the locking mechanism 30 positioned within the hub 10 similar to the spoked wheel 4 of Figure 4.

Figures 5A and 5B illustrate a cross-section view of the spoked wheel 5 of Figure 5 in accordance with the embodiment of the present invention. The cross-section view of the spoked wheel 5 in Figure 5A is similar to the cross-section view of the spoked wheel 4 of Figure 4A, in which the locking mechanism 30 includes a cam 32 and the locking pin 34. Similar to Figure 4A, the spoked wheel 5 also includes an axle 40 partially inserted into the hub 10 through the opening 10a and the bearing 42 placed in a groove (not shown) to support the axle 40 such that bearings 42 prevent the axle 40 to be completely removed from the hub 10. The locking and the unlocking of the wheel will be described in greater detail herein below.

As shown in Figure 5A, the axle is partially inserted into the hub 10. In this position, cam 32 is pushed inwards towards the groove of the hub 10 causing the locking pin 34 to push outwards towards the locking spoke 18. As such, the wheel of Figure 5A is in an unlocked position.

As shown in Figure 5B, the axle 40 is fully inserted into the hub 10 and the locking mechanism 30. In this position, the cam 32 is pushed outwards away from the groove in the hub 10 further increasing the compression of the locking pin 34 against the locking spoke 18. This action causes the locking pin 34 to fully engage with the one of the first set of the notches 21a and 21b on the locking spoke 18 thereby locking the wheel. In one embodiment, the axle 40 may be fully inserted into the hub 10 only when the locking spoke 18 is in a locked position. As discussed above, the locking spoke 18 is in the lock position upon alignment of the slot 18a with the latch pin 19 and the alignment of the slot 18b with the hand rim 17. Thus, the locking spoke 18 in the lock position and the locking pin 34 is fully engaged with one of the first set of the notches 21a and 21b on the locking spoke 18 ensuring the wheel is in the locked opened configuration as illustrated in Figure 5.

Figures 5C and 5D illustrate a cross-section view of the spoked wheel 5 of Figure 5 in accordance with another embodiment of the present invention. The cross-section view of the spoked wheel 5 in Figure 5C is similar to the cross-section view of the spoked wheel 4 of Figure 4C, in which the locking mechanism 30 includes at least two cams 32a and 32b placed across from each other and the locking pins 34. Similar to Figure 4A, the spoked wheel 5 also includes an axle 40 partially inserted into the hub 10 through the opening 10a and at least two bearings 42 placed in a groove (not shown) to support the axle 40 such that bearings 42 prevent the axle 40 to be completely removed from the hub 10.

Referring back to Figure 5C, when the axle 40 is inserted into the hub 10 but not into the locking mechanism 30, the two cams 32a and 32b are constantly pushed inward towards each other while the locking pins 34 are constantly pushed outwards towards the locking spoke 18. As such, the wheel of Figure 5c is in an unlocked position.

As shown in Figure 5D, the axle 40 is inserted into the locking mechanism 30 of the hub 10, which causes the two cams 32a and 32b to separate from one another pushing them outwards and further increasing the compression of the locking pins 34 against the locking spoke 18. This action causes the locking pins 34 to fully engage with the first set of the notches 21a and 21b on the locking spoke 18 as illustrated in Figure 5E. Figure 5E shows a top view of a portion of the wheel in an open locked configuration with the locking pins 34 are fully engaged with the first set of the notches 21a and 21b of the locking spoke.. In one embodiment, in order for the axle 40 to be inserted into the locking mechanism 30 of the hub 10 when the wheel is in open configuration, the locking spoke 18 is in the lock position. As discussed above, the locking spoke 18 is in the lock position upon alignment of the slot 18a with the latch pin 19 and the alignment of the slot 18b with the rim pin 15. Thus, the locking spoke 18 in the lock position and the locking pins 34 fully engaged with the first set of the notches 21a and 21b on the locking spoke 18 ensures the wheel in its locked opened configuration as illustrated in Figure 5. The spokes 14 and 16 create an approximately X shape in the locked open configuration of the wheel. The wheel is locked in its fully round opened configuration and is ready for use.

In some embodiments, the latch pin 19 prevents the locking spoke 18 from unintentional disengagement with the wheel. In some embodiments, the locking spoke 18 prevents an unintentional folding and/or collapsing of the wheel.

In some embodiments, the locking mechanism 30 prevents the spoked wheel from collapsing when the axle 40 is fully inserted into the hub 10 as shown in Figure 5D. In other embodiments, the locking mechanism 30 is configured to prevent full insertion of the axle 40 into the hub when the spoked wheel is not fully in an unlocked position. As such, the axle 40 will not be able to pass through the locking mechanism 30 until the locking spoke 18 is in the lock position. The locking pin 40 prevents full insertion of the axle 40 by closing the cam 32 when the spoked wheel is not fully locked opened, i.e. then the locking spoke 18 is not in the lock position. As such, it prevents the locking spoke 18 to move or rotate around the spoked wheel while the axle 40 is inserted into the locking mechanism 30 in order to provide a safety feature to a user of the wheel. Furthermore, the locking mechanism 30 prevents the spoke wheel from collapsing when the spoked wheel is in fully opened configuration. In one embodiment, the locking mechanism 30 prevents the spoked wheel from collapsing when the axle 40 is fully inserted into the hub 10. In another embodiment, the locking mechanism 30 prevents the spoked wheel from collapsing while in use, for example mounted onto the wheelchair.

In one embodiment of the present invention, the spoked wheel may be mounted to and dismounted from the wheelchair only in the locked opened position as discussed above.

In order to place the wheel in an unlocked open position, the above process is reversed. Firstly, the axle 40 is completely removed from the locking mechanism 30, however, may remain in the hub 10. This allows the two cams 32a and 32b to spring back towards each other (as illustrated in Figure 5C) which in turn allows the locking pins 34 to disengage with the first set of the notches 21a and 21b of the locking spoke 18 as illustrated in Figure 5F. Figure 5F shows a top view of a portion of wheel in an unlocked open position with the locking pins 34 disengaged from the two of the notches 21 of the locking spoke.

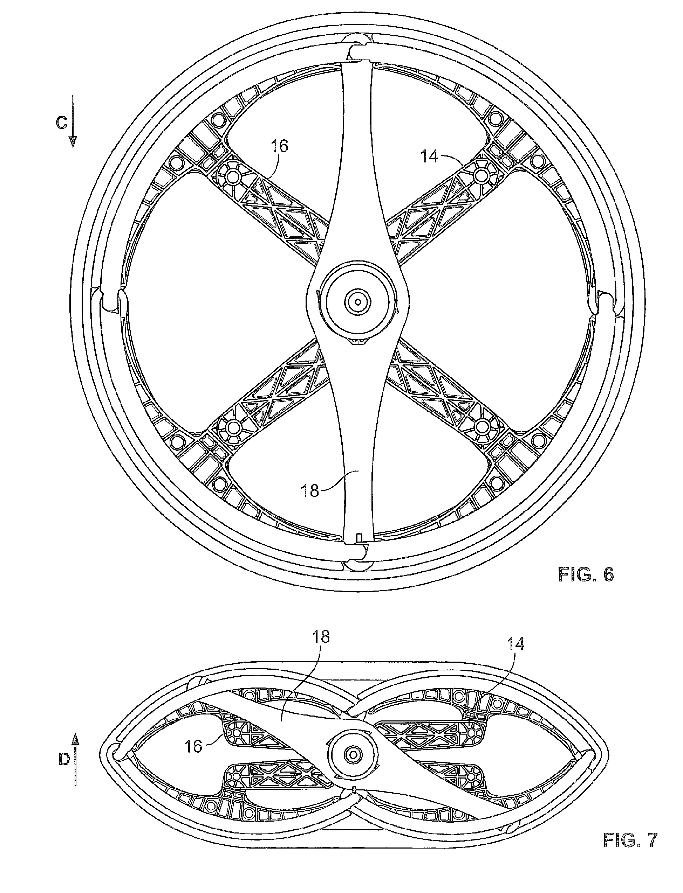

Figure 6 illustrates a top view of the wheel of Figure 5 in an open locked configuration. At this position, the locking spoke 18 may be placed in the unlock position. As discussed above, the locking spoke 18 may be unlocked and configured to move/rotate around the wheel upon separation of the slot 18a from the latch pin 19.

Upon the locking spoke 18 in an unlock position (Figure 5F); the wheel may be folded by pushing the rim 12 in the areas coincide with the latch pin 19 and the rim pin 15 towards each other. In one embodiment, the wheel may be manually pressed and pushed inward in the direction of the arrows C to allow the wheel to be moved into the folded configuration as shown in Figure 7. In one embodiment, this folded action causes the spokes 14 and 16 to move inwardly and towards one another such that the spoke 14 moves inwardly in the direction of the arrows C and the spoke 16 moves inwardly in the direction D, opposite to the arrows C. As shown in Figure 7, spokes 14 and 16 create an approximately scissor shape in the unlocked folded configuration of the wheel.

In the unlocked folded configuration of the wheel illustrated in Figure 7, the axle 40 (not shown) is in the hub 10, but not in the locking mechanism 30. As such, the axle 40 (not shown) tends to push outwards from the center of the wheel making it inconvenient to store the wheel in a compact manner and providing for a probability of losing the axle (not shown) if it falls from the hub 10. Thus, it is highly desirable to insert the axle 40 (not shown) into the locking mechanism 30 in the unlocked folded configuration. As opposed to the open configuration of the wheel discussed above, the locking spoke 18 is placed in the unlock position when the wheel is in unlocked folded configuration of Figure 7.

In one embodiment, the spoked wheel of Figure 7 is collapsible around the center of the hub 10. In some embodiments, the spoke wheel of Figure 7 is collapsible around the center of the hub to a height approximately half the diameter of the spoked wheel in a fully opened position.

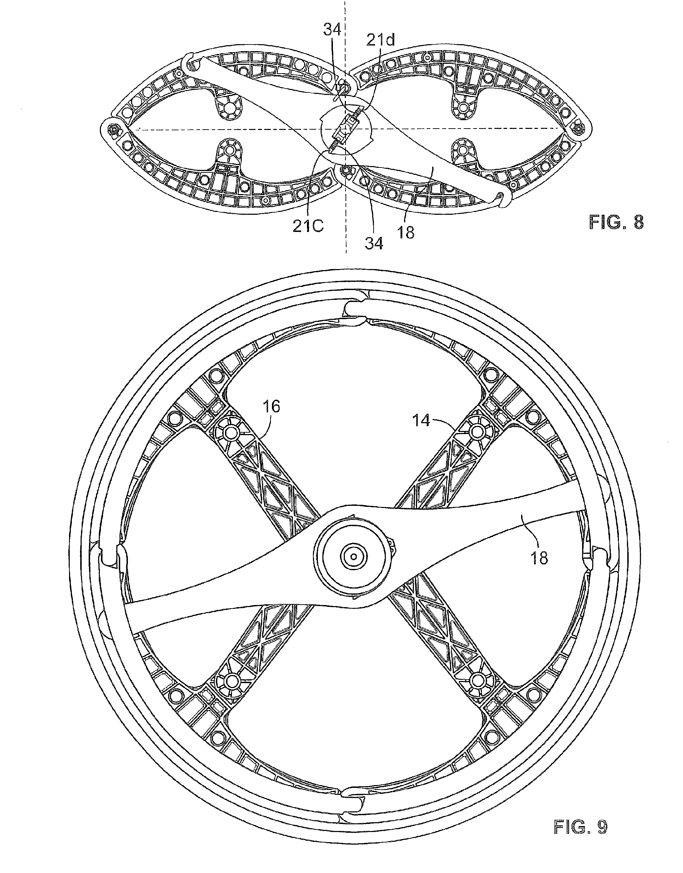

As discussed above with respect to Figure 5D, upon full insertion the axle 40 into the locking mechanism 30 causes the two cams 32a and 32b to separate from one another pushing them outwards and further increasing the compression of the locking pins 34 against the locking spoke 18. This action causes the locking pins 34 to fully engage with the second set of the notches 21c and 21d on the locking spoke 18 to lock the wheel in a folded configuration as illustrated in Figure 8. Figure 8 illustrates a top view of a portion of the wheel in a locked folded configuration.

In one embodiment, the tire 13 may be removed from the wheel when the wheel is in unlocked or locked folded configuration as discussed above with respect to Figures 7 and 8 respectively. In another embodiment, the tire 13 may be manually removed from the wheel without requiring any tools when the wheel is in the unlocked or locked folded configuration.

In one embodiment, the hand rim 17 may be removed from the wheel when the wheel is in unlocked or locked folded configuration as discussed above with respect to Figures 7 and 8 respectively. In another embodiment, the tire 17 may be manually removed from the wheel without requiring any tools when the wheel is in the unlocked or locked folded configuration.

Further, in order to place the wheel in the open fully round configuration, the above process is reversed. Firstly, the wheel may be manually pressed and pushed outward in the direction D as shown in Figure 7. This un-folded action causes the spokes 14 and 16 to move outwardly and away from one another such that the spoke 14 moves outwardly in the direction of the arrow D and spoke 16 moves outwardly in the direction of the arrow C, opposite to the arrows D. This action results in the wheel placed in an open fully round configuration but in an unlocked position as shown in Figure 9. The spokes 14 and 16 create an approximately X- shape in the open unlocked configuration of the wheel.

In order to lock the wheel with the open fully round configuration of Figure 6. the process described above with respect to Figure 5C is repeated.

It is to be understood that the exemplary embodiments presented herein are merely illustrative of the invention and that many variations of the above-described embodiments may be devised by one skilled in the art without departing from the scope of the invention.

Aspects and features of the present disclosure are set out in the following numbered clauses:
1. A spoked wheel comprising:
   a rim;
   a hub configured to rotate with the rim; and
   a locking spoke extending between the hub and the rim.
2. The spoked wheel of clause 1 further comprising a hand rim mounted onto the rim and configured to align above the rim, wherein the locking spoke extends diametrically across the hand rim.
3. The spoked wheel of clause 2 further comprising at least one latch pin and a rim pin securely connected between the hand rim and the rim, wherein the latch pin is positioned approximately 180 degrees from the rim pin.
4. The spoked wheel of clause 3 further comprising a latch lever mounted on the latch pin, wherein the latch lever comprises a spring.
5. The spoked wheel of clause 4 wherein the locking spoke comprising opposed ends having a slot, and at least one of the slots is configured to engage with the rim pin and other of the slots is configured to engage with the latch pin to lock the locking spoke.
6. The spoked wheel of clause 5 wherein the at least one of the slots is configured to disengage with the rim pin and the other of the slots is configured to disengage with the latch pin to unlock the locking spoke.
7. The spoked wheel of clause 5 further comprising an axle partially inserted into an opening of the hub, wherein the axle is configured to be removable from the hub.
8. The spoked wheel of clause 7 further comprising at least one bearing coupled to the hub, wherein the bearing is configured to support the axle.
9. The spoked wheel of clause 1 further comprising a tire held on the rim.
10. The spoked wheel of clause 1 is collapsible around center of the hub.
11. The spoked wheel of clause 10 wherein the spoked wheel is collapsible around the center of the hub to a height approximately half the diameter of the spoked wheel in a fully opened configuration.
12. The spoked wheel of clause 1 further comprising at least one spoke extending between the hub and the rim and supporting the rim on the hub.
13. The spoked wheel of clause 1 further comprising at least two spokes extending between the hub and the rim and supporting the rim on the hub, each spoke extending diametrically across the rim and having opposed ends that are each pivotally attached to the rim.
14. A spoked wheel comprising:
   a rim;
   a hub configured to rotate with the rim; and
   a locking mechanism placed within the hub.
15. The spoked wheel of clause 14 wherein the locking mechanism comprising at least one cam, wherein the at least one cam is configured to push inwards to unlock the spoked wheel and push outwards to lock the spoked wheel.
16. The spoked wheel of clause 14 wherein the locking mechanism comprising at least two cams, wherein the at least two cams function to push inwards towards each other to unlock the spoked wheel and push outwards away from each other to lock the spoked wheel.
17. The spoked wheel of clause 14 wherein the locking mechanism further comprising at least one locking pin.
18. The spoked wheel of clause 14 further comprising an axle partially inserted into an opening of the hub, wherein the axle is configured to be removable from the hub.
19. The spoked wheel of clause 18 further comprising at least one bearing coupled to the hub, wherein the at least one bearing is configured to support the axle.
20. The spoked wheel of clause 18 wherein the locking mechanism is configured to prevent full insertion of the axle into the hub when the spoked wheel is not fully in an unlocked position.
21. The spoked wheel of clause 18 wherein the locking mechanism functions to prevent the spoked wheel from collapsing when the axle is fully inserted into the hub.
22. The spoked wheel of clause 14 wherein the locking mechanism functions to prevent the spoked wheel from collapsing while in use.
23. The spoked wheel of clause 14 further comprising a tire held on the rim.
24. The spoked wheel of clause 14 is collapsible around center of the hub.
25. The spoked wheel of clause 24 wherein the spoked wheel is collapsible around the center of the hub to a height approximately half the diameter of the spoked wheel in a fully opened configuration
26. The spoked wheel of clause 14 further comprising at least one spoke extending between the hub and the rim and supporting the rim on the hub.
27. The spoked wheel of clause 14 at least two spokes extending between the hub and the rim and supporting the rim on the hub, each spoke extending diametrically across the rim and having opposed ends that are each pivotally attached to the rim.
28. A spoked wheel comprising:
   a rim;
   a hub configured to rotate with the rim;
   a locking mechanism placed within the hub; and
   a locking spoke extending between the hub and the rim.
29. The spoked wheel of clauses 28 further comprising a hand rim mounted onto the rim and configured to align above the rim, wherein the locking spoke extends diametrically across the hand rim.
30. The spoked wheel of clause 29 further comprising at least one latch pin and a rim pin securely connected between the hand rim and the rim, wherein the latch pin is positioned approximately 180 degrees from the rim pin.
31. The spoked wheel of clause 30 further comprising a latch lever mounted on the rim pin, wherein the latch lever comprises a spring.
32. The spoked wheel of clause 30 wherein the locking spoke comprising opposed ends having a slot, and at least one of the slots is configured to engage with the rim pin and other of the slots is configured to engage with the latch pin to lock the locking spoke.
33. The spoked wheel of clause 30 wherein the at least one of the slots is configured to disengage with the rim pin and the other of the slots is configured to disengage with the latch pin to unlock the locking spoke.
34. The spoked wheel of clause 28 further comprising an axle partially inserted into an opening of the hub, wherein the axle is configured to be removable from the hub.
35. The spoked wheel of clause 34 further comprising at least one bearing coupled to the hub, wherein the bearing is configured to support the axle.
36. The spoked wheel of clause 34 wherein the locking spoke further comprising at least one notch placed around a center portion of the locking spoke positioned above the hub.
37. The spoked wheel of clause 36 wherein the locking mechanism further comprising at least one locking pin configured to engage with the at least one notch of the locking spoke.
38. The spoked wheel of clause 37 wherein the locking mechanism comprising at least one cam, wherein the at least one cam is configured to push inwards to unlock the spoked wheel and push outwards to lock the spoked wheel.
39. The spoked wheel of clause 38 wherein upon locking of the locking spoke, the axle is insertable into the locking mechanism causing the at least one cam to push outwards and engaging the at least one locking pin with at least one notch of the locking spoke to lock the spoked wheel.
40. The spoked wheel of clause 39 wherein upon removing of the axle from the locking mechanism, the at least one cam push inwards causing the at least one locking pin to disengage from the at least one of the locking spoke to unlock the spoked wheel.
41. The spoked wheel of clause 34 wherein the locking spoke further comprising at least two notches placed around a center portion of the locking spoke positioned above the hub.
42. The spoked wheel of clause 41 wherein the locking mechanism comprising at least two cams, wherein the at least two cams function to push inwards towards each other to unlock the spoked wheel and push outwards away from each other to lock the spoked wheel.
43. The spoked wheel of clause 42 wherein the locking mechanism further comprising at least two locking pins configured to engage with the at least two of the notches of the locking spoke.
44. The spoked wheel of clause 43 wherein upon locking of the locking spoke, the axle is insertable into the locking mechanism causing the at least two cams to push outwards and engaging the at least locking pins with at least two of the notches of the locking spoke to lock the spoked wheel.
45. The spoked wheel of clause 44 wherein upon removing of the axle from the locking mechanism, the at least two cams push inwards causing the at least two locking pins to disengage from the at least notches of the locking spoke to unlock the spoked wheel.
46. The spoked wheel of clause 34 wherein the locking mechanism functions to prevent full insertion of the axle into the hub when the spoked wheel is not fully in an unlocked position.
47. The spoked wheel of clause 34 wherein the locking mechanism functions to prevent the spoked wheel from collapsing when the axle is fully inserted into the hub.
48. The spoked wheel of clause 28 wherein the locking mechanism functions to prevent the spoked wheel from collapsing when in use.
49. The spoked wheel of clause 28 further comprising a tire held on the rim.
50. The spoked wheel of clause 28 is collapsible around center of the hub.
51. The spoked wheel of clause 50 wherein the spoked wheel is collapsible around the center of the hub to a height approximately half the diameter of the spoked wheel in a fully opened configuration.
52. The spoked wheel of clause 28 further comprising at least one spoke extending between the hub and the rim supporting the rim on the hub.
53. The spoked wheel of clause 28 further comprising at least two spokes extending between the hub and the rim and supporting the rim on the hub, each spoke extending diametrically across the rim and having opposed ends that are each pivotally attached to the rim.

## Claims

1. A spoked wheel comprising:
a rim;
a hub configured to rotate with the rim; and
a locking spoke extending between the hub and the rim; and / or
a locking mechanism placed within the hub.

2. The spoked wheel of claim 1, wherein the spoked wheel comprises
a) a rim; a hub configured to rotate with the rim; and a locking spoke extending between the hub and the rim; or
b) a rim; a hub configured to rotate with the rim; a locking mechanism placed within the hub; and a locking spoke extending between the hub and the rim;
further comprising a hand rim mounted onto the rim and configured to align above the rim, wherein the locking spoke extends diametrically across the hand rim.

3. The spoked wheel of claim 2, further comprising at least one latch pin and a rim pin securely connected between the hand rim and the rim, wherein the latch pin is positioned approximately 180 degrees from the rim pin.

4. The spoked wheel of claim 3, wherein the spoked wheel comprises
a rim; a hub configured to rotate with the rim; and a locking spoke extending between the hub and the rim; and
further comprising a latch lever mounted on the latch pin, wherein the latch lever comprises a spring.

5. The spoked wheel of claim 3, wherein the spoked wheel comprises a rim; a hub configured to rotate with the rim; a locking mechanism placed within the hub; and a locking spoke extending between the hub and the rim; and
further comprising a latch lever mounted on the rim pin, wherein the latch lever comprises a spring.

6. The spoked wheel of claim 3 or claim 4, wherein the locking spoke comprising opposed ends having a slot, and at least one of the slots is configured to engage with the rim pin and other of the slots is configured to engage with the latch pin to lock the locking spoke.

7. The spoked wheel of claim 3 or claim 6, wherein the at least one of the slots is configured to disengage with the rim pin and the other of the slots is configured to disengage with the latch pin to unlock the locking spoke.

8. The spoked wheel of
a) claim 6, wherein the spoked wheel comprises a rim; a hub configured to rotate with the rim; and a locking spoke extending between the hub and the rim; and further comprising a latch lever mounted on the latch pin, wherein the latch lever comprises a spring;
b) claim 1, wherein the spoked wheel comprises a rim; a hub configured to rotate with the rim; and a locking mechanism placed within the hub; or
c) claim 1, wherein the spoked wheel comprises a rim; a hub configured to rotate with the rim; a locking mechanism placed within the hub; and a locking spoke extending between the hub and the rim;
further comprising an axle partially inserted into an opening of the hub, wherein the axle is configured to be removable from the hub.

9. The spoked wheel of claim 8, further comprising at least one bearing coupled to the hub, wherein the bearing is configured to support the axle.

10. The spoked wheel of claim 1, further comprising a tire held on the rim.

11. The spoked wheel of claim 1, is collapsible around center of the hub; for example, wherein the spoked wheel is collapsible around the center of the hub to a height approximately half the diameter of the spoked wheel in a fully opened configuration.

12. The spoked wheel of claim 1, further comprising at least one spoke extending between the hub and the rim and supporting the rim on the hub.

13. The spoked wheel of claim 1, further comprising at least two spokes extending between the hub and the rim and supporting the rim on the hub, each spoke extending diametrically across the rim and having opposed ends that are each pivotally attached to the rim.

14. The spoked wheel of claim 8, the spoked wheel comprising:
a) a rim; a hub configured to rotate with the rim; and a locking mechanism placed within the hub; or
b) a rim; a hub configured to rotate with the rim; a locking mechanism placed within the hub; and a locking spoke extending between the hub and the rim;
wherein the locking mechanism is configured to prevent full insertion of the axle into the hub when the spoked wheel is not fully in an unlocked position.

15. The spoked wheel of claim 8, the spoked wheel comprising:
a) a rim; a hub configured to rotate with the rim; and a locking mechanism placed within the hub; or
b) a rim; a hub configured to rotate with the rim; a locking mechanism placed within the hub; and a locking spoke extending between the hub and the rim;
wherein the locking mechanism functions to prevent the spoked wheel from collapsing when the axle is fully inserted into the hub.

16. The spoked wheel of claim 1, the spoked wheel comprising:
a) a rim; a hub configured to rotate with the rim; and a locking mechanism placed within the hub; or
b) a rim; a hub configured to rotate with the rim; a locking mechanism placed within the hub; and a locking spoke extending between the hub and the rim;
wherein the locking mechanism functions to prevent the spoked wheel from collapsing while in use.

17. The spoked wheel of claim 1, the spoked wheel comprising: a rim; a hub configured to rotate with the rim; and a locking mechanism placed within the hub; wherein the locking mechanism comprising at least one cam, wherein the at least one cam is configured to push inwards to unlock the spoked wheel and push outwards to lock the spoked wheel; for example, wherein the locking mechanism comprising at least two cams, wherein the at least two cams function to push inwards towards each other to unlock the spoked wheel and push outwards away from each other to lock the spoked wheel.

18. The spoked wheel of claim 1, the spoked wheel comprising: a rim; a hub configured to rotate with the rim; and a locking mechanism placed within the hub; wherein the locking mechanism further comprising at least one locking pin.

19. The spoked wheel of claim 8, the spoked wheel comprising: a rim; a hub configured to rotate with the rim; a locking mechanism placed within the hub; and a locking spoke extending between the hub and the rim;
wherein the locking spoke further comprising at least one notch placed around a center portion of the locking spoke positioned above the hub; for example,
wherein the locking mechanism further comprising at least one locking pin configured to engage with the at least one notch of the locking spoke; for example,
wherein the locking mechanism comprising at least one cam, wherein the at least one cam is configured to push inwards to unlock the spoked wheel and push outwards to lock the spoked wheel; for example,
wherein upon locking of the locking spoke, the axle is insertable into the locking mechanism causing the at least one cam to push outwards and engaging the at least one locking pin with at least one notch of the locking spoke to lock the spoked wheel; for example,
wherein upon removing of the axle from the locking mechanism, the at least one cam push inwards causing the at least one locking pin to disengage from the at least one of the locking spoke to unlock the spoked wheel;
or
wherein the locking spoke further comprising at least two notches placed around a center portion of the locking spoke positioned above the hub; for example,
wherein the locking mechanism comprising at least two cams, wherein the at least two cams function to push inwards towards each other to unlock the spoked wheel and push outwards away from each other to lock the spoked wheel; for example,
wherein the locking mechanism further comprising at least two locking pins configured to engage with the at least two of the notches of the locking spoke; for example,
wherein upon locking of the locking spoke, the axle is insertable into the locking mechanism causing the at least two cams to push outwards and engaging the at least locking pins with at least two of the notches of the locking spoke to lock the spoked wheel; for example,
wherein upon removing of the axle from the locking mechanism, the at least two cams push inwards causing the at least two locking pins to disengage from the at least notches of the locking spoke to unlock the spoked wheel.
